# EUROPEAN PATENT APPLICATION

(11) **EP 2 051 361 A1**
(43) Date of publication of application: **22.04.2009**
(21) Application number: 07743621.0
(22) Date of filing: 18.05.2007
(51) Int. Cl.: H02M 5/297, H02M 5/293

(54) **HIGH-VOLTAGE AC DIRECT POWER CONVERTER**

(30) Priority: 24.05.2006 JP 2006143563
(71) Applicant: Meidensha Corporation, Tokyo 141-0032 (JP)
(72) Inventor: TADANO, Yugo, Tokyo 141-0032 (JP)
(74) Representative: Manitz, Finsterwald & Partner GbR
(86) International application number: PCT/JP2007/060186
(87) International publication number: WO 2007/135968

(57) **Abstract**

**[Problem]** A main circuit including a transformer and an LC filter can be simplified.

**[Means For Solving Problem]**

An LC filter is connected in series with each secondary winding of a multiple winding of a multiple winding transformer. For each stage of a plurality of alternating current direct conversion circuits, the power supply side are two-parallel connected MC1A and MC1B, MC2A and MC2B, and MC3A and MC3B, phase terminals of the opposite side to the power supply side of one of the alternating current direct conversion circuits of a lowest voltage stage are interconnected, the opposite side to the power supply side of one of the alternating current direct conversion circuits of a maximum voltage stage is connected to a load, the opposite side to the power supply side of one of the alternating current direct conversion circuits positioned between the lowest voltage stage and the maximum voltage stage and at the other stage and the opposite side to the power supply side of the other of the alternating current direct conversion circuits are interconnected, the opposite side to the power supply side of the other of the alternating current direct conversion circuits and the opposite side to the power supply side of the other of the alternating current direct conversion circuits of the succeeding stage are interconnected. A high-voltage alternating current direct power converter has a configuration in which the phases of the secondary windings of the multiple winding transformer are different from one another to suppress input higher harmonics, a configuration in which each of the alternating current direct conversion circuits converts the input into a sinusoidal wave singly and the phases of the respective secondary windings of the multiple winding transformers are the same to suppress the input higher harmonics, and a configuration in which the two-parallel connected conversion circuits are used for a basic unit configuration, and a controller is made common in each basic unit.

## Description

### TECHNICAL FIELD

The present invention relates to a high-voltage alternating current direct power converter (a matrix converter, an AC-AC direct power conversion circuit) and relates, particularly, to the high-voltage alternating current direct power converter which obtains a high-voltage output by serial multistage connections of alternating current direct conversion circuits.

### BACKGROUND ART

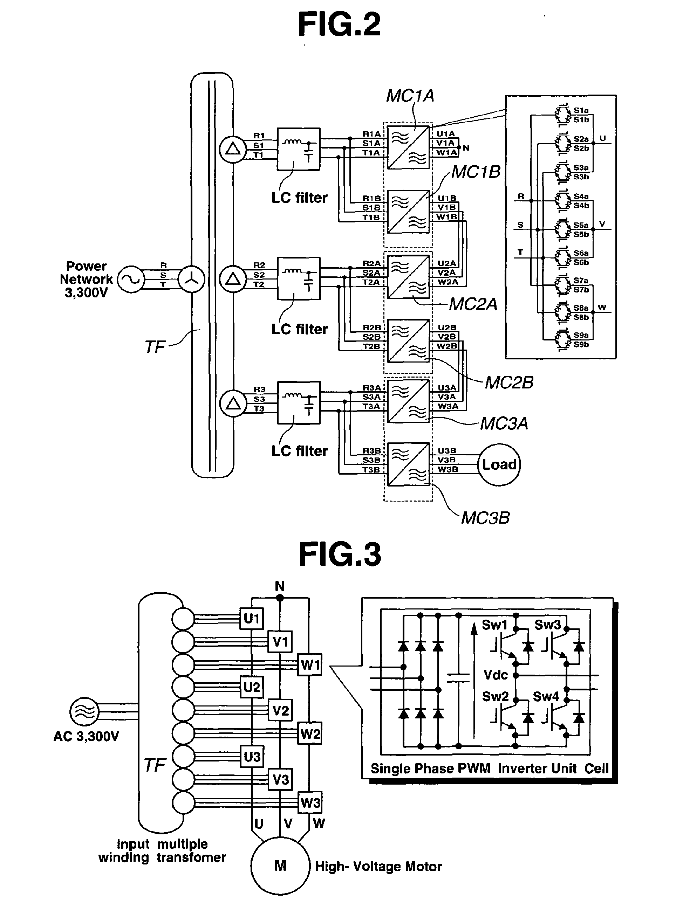

Fig. 3 shows a main circuit configuration example of a conventional high-voltage inverter. The high-voltage inverter directly drives a high-voltage motor of 3300 volts and 6000 V class in a multi-voltage level PWM waveform (for example, refer to a non-patent document 1). Nine windings are installed on a secondary side of multiplex winding transformer TF to obtain a step-down output on each secondary winding of TF. Single phase inverter units U1 through U3, V1 through V3, and W1 through W3 rectify respective three-phase outputs at secondary windings of transformer TF and set these rectified outputs as respective direct current power supplies thereof to obtain single-phase alternating current outputs by inverse conversion circuits in a single phase configuration, as representatively in single-phase configuration. Each output of single-phase inverter units U1 through U3, V1 through V3, and W1 through W3 is connected in a multiple series connection for each of U phase, V phase, and W phase to obtain a single phase high voltage output for each of phases U, V, and W and is mutually connected with one end of each single-phase high voltage output as a neutral point N, and drives the load such as a high-voltage motor M with a single-phase output obtained at the other end driving the load. It should be noted that each unit refers to a basic unit constituting the conversion units.

This high-voltage inverter cannot regenerate a regenerated power from the load toward the power supply side (toward the transformer TF side) since each single-phase inverter unit is alternating current-direct current converted by means of the rectifiers. In order to make the power regeneration possible, a power supply regenerative converter is separately required. A high-voltage matrix converter as having the power regeneration function has been proposed which obtains the high-voltage output by connecting the single-phase matrix converters in a multistage manner (refer to patent document 1 and non-patent document 2).

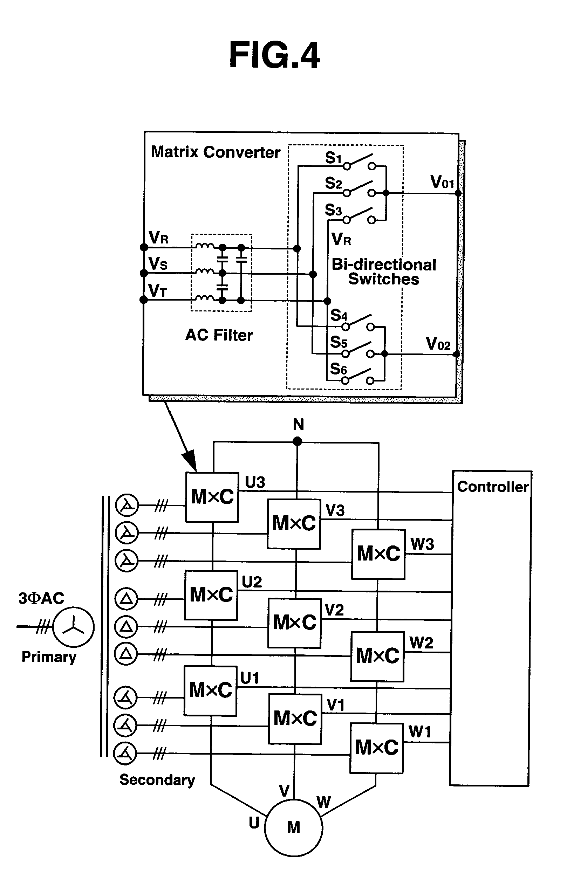

Fig. 4 shows a main circuit configuration of this high-voltage matrix converter. In Fig. 4, single-phase matrix converter units MxC are arranged in place of single-phase inverter units U1 through U3, V1 through V3, and W1 through W3 shown in Fig. 3. Single-phase matrix converter units MxC obtain single-phase alternating currents directly from the three-phase alternating current and each of single-phase matrix converters WxC is constituted by bi-directional switches S1 through S6 and an input filters AC Filter (input LC filter) between the three-phase input thereof and the single-phase output thereof. The bi-directional switches are controlled by a PWM control to supply the single-phase output to the arbitrary frequency and output and, during the regeneration of the load, the power can be regenerated toward the power supply side.

It should be noted that the phase difference is provided for each of the secondary windings to reduce the higher harmonic current for the multiplex winding transformer TF, in both of Figs. 3 and 4.

Non-patent document 1: a Japanese paper D of the Institute Of Electrical Engineers in Japan titled " A Multilevel PWM Strategy suitable for High-Voltage Motor Direct Drive Systems in Consideration of the Adverse Effect of a Deadtime authored by Yugo Tadano et al, Volume 126 No. 1, pages 1 through 9.

Patent document 1: A Japanese Patent Application Publication (tokkai) No. 2005-45999.

Non-patent document 2: Motor Drives Using Medium-Voltage matrix Converter authored by Yuzo Ueda et al. Published as MID-05-22 through 28 in the Papers of Technical Meeting on Metal Industries Division of IEE Japan published on December 22, 2005.

### DISCLOSURE OF THE INVENTION

### Problem to be Solved:

Each of the conventional high-voltage inverter and high-voltage matrix converter has the main circuit configuration wherein single-phase inverter units (Fig.3) or single-phase matrix converter units (Fig. 4) are in the serial multi-stage connections, the power source side of each unit takes out an alternating current power from the individual secondary windings of the transformer. In such a configuration as described above, at least nine units are needed, further nine secondary transformers (27 secondary windings) are needed, the whole configuration of the apparatus becomes large-sized and becomes complicated.

Furthermore, since the rectifiers and smooth capacitor are required for each unit in the configuration of Fig. 3 and LC filter is required for each unit in the configuration of Fig. 4, large scaling and increased cost are brought out in the whole apparatus.

It is an object of the present invention to provide a high-voltage alternating current direct power converter which can achieve a simplification of the main circuit configuration including the transformer and LC filters.

The present invention has the following features to solve the above-described problems.

(1) A high-voltage AC direct power converter for converting directly a high-voltage alternating current power wherein a plurality of alternating current direct conversion circuits, each of the alternating current direct conversion circuits directly converting voltage and frequency inputted from a multiple winding transformer on which a plurality of secondary windings are installed into arbitrary voltage and frequency and outputting them, and a plurality of LC filers, each of the LC filters being interposed between one of the secondary windings and the alternating current direct conversion circuits, are disposed, the alternating current direct conversion circuits are connected in a multi-stage connection configuration, and a load is directly driven with a high voltage through a control over bi-directional switches in each of the alternating current direct conversion circuits and wherein the multi-stage connection configuration of the respective alternating current direct conversion circuits is made in a way that two parallel connections are made at power supply sides of the two parallel-connected alternating current direct conversion circuits for each stage of the alternating current direct conversion circuits, each phase terminal of an opposite side to the power supply side of one of the two parallel connected alternating current direct conversion circuits of a lowest voltage stage is interconnected, the opposite side to the power supply side of one of the two parallel connected alternating current direct conversion circuits of a maximum voltage stage is connected to the load, the opposite side to the power supply side of one of the two parallel connected alternating current direct conversion circuits of each stage positioned between the lowest voltage stage and the maximum voltage stage is interconnected to the opposite side to the power supply side of one of the two parallel connected alternating current direct conversion circuits of a preceding stage, and the opposite side to the power supply side of the other of the two parallel-connected alternating current direct conversion circuits is interconnected to the opposite side to the power supply side of one of the two parallel connected alternating current direct conversion circuits of the subsequent stage.

(2) In the high-voltage AC direct power converter, each of the alternating current direct conversion circuits is a multi-phase input and multi-phase output alternating current direct conversion circuit.

(3) In the high-voltage AC direct power converter, each secondary winding of the multiple winding transformer has mutually a phase difference to suppress input higher harmonics.

(4) In the high-voltage AC direct power converter, each of the alternating current direct conversion circuits provides singly an input sinusoidal wave and each of the secondary windings of the multiple winding transformer has mutually the same phase to suppress the input higher harmonics.

(5) In the high-voltage AC direct power converter, the two parallel connected alternating current direct conversion circuits are a basic unit configuration and its controller for the basic unit configuration is commonly used within the basic unit configuration.

### Effects of the invention:

As described above, in the high-voltage alternating current direct power converter according to the present invention, the main circuit configuration including the transformer and the LC filter can be simplified.

Specifically,

(1) A general-purpose multi-phase input/multi-phase output matrix connected semiconductor switching device module can be utilized.

(2) As compared with the conventional methods, the same apparatus can be achieved by the same number of switching devices.

(3) Since the LC filters are commonly used by the parallel connections of the conversion circuits, the number of LC filters can be reduced as compared with the conventional methods.

(4) In addition to the common use of the LC filters, the control of offsetting current ripples by the shifts of the carrier phases of the conversion circuits is carried out so that reductions of capacities and sizes of the LC filters can be expected.

(5) As compared with the conventional methods, the number of the secondary windings of the multiple winding transformer can be reduced.

(6) As is different from the conventional methods, the output side of the AC direct power converter is also in the three-phase connection. Thus, when the input current PWM control is carried out, a degree of selection freedom of the phase which is a source of the slicing is brought out and the input sinusoidal wave can be achieved by the conversion circuit solely.

(7) Since a design of the secondary windings of the input multiplex winding transformer becomes simple, structure, cost, and size of the transformer give further merits.

(8) Since the wiring between the parallel units and the controller can commonly be used, a reduction of the wiring inductance and the common use of the controller can be achieved.

### BEST MODE FOR CARRYING OUT THE INVENTION

(Embodiment 1)

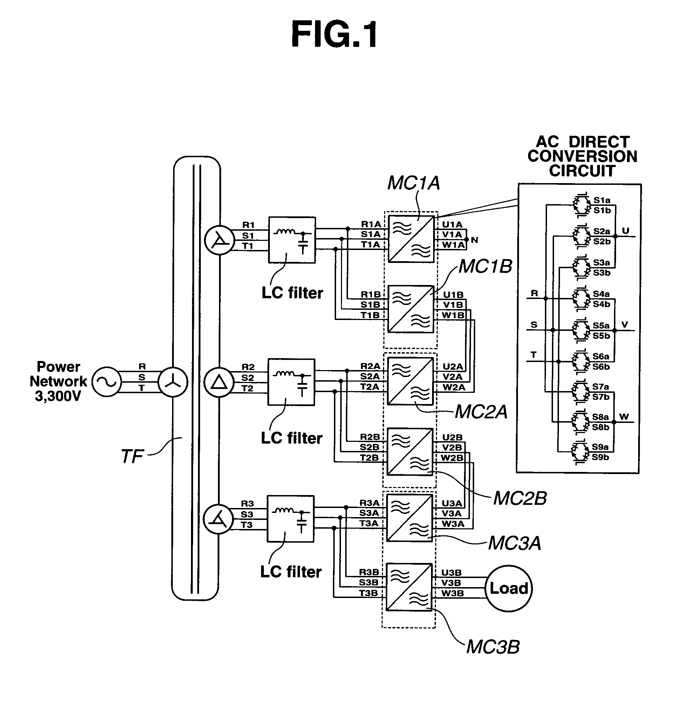

Fig. 1 is a configuration view of a main circuit of a high-voltage alternating current direct power converter which indicates a preferred embodiment according to the present invention and is an example in which a three-phase alternating current direct power converter is used. The following is a detailed description of the main circuit configuration shown in Fig. 1.

A multiple winding transformer TF is configured to have three secondary windings providing a phase difference from one another. Each secondary winding is connected to power supply sides of two parallel-connected alternating current direct conversion circuits MC1A and MC1B, MC2A and MC2B, and MC3A and MC3B via LC filters. Each LC filter serves to suppress higher harmonics for input and output currents between the two parallel-connected alternating current direct conversion circuits and an alternating current power supply.

The two-parallel connected alternating current direct conversion circuits MC1A and MC1B, MC2A and MC2B, and MC3A and MC3B are constituted by three-phase-to-three-phase alternating current direct conversion circuits, as typically shown in MC1A. Two parallel-connected conversion circuits MC1A and MC1B provide a lowest voltage stage, three phase terminals thereof at power supply sides thereof are parallel connected at the mutually same phases and three-phase terminals at an opposite side of the one MC1A of two parallel-connected conversion circuits are interconnected to provide a neutral point N, and three phase terminals of an opposite side of the other MC1B of two parallel-connected conversion circuits are serially connected to the opposite side of the three-phase terminals to the power supply side of a subsequent stage of one MC2A of the two parallel-connected conversion circuits to constitute a two circuit serial connection configuration.

Similarly, two parallel-connected conversion circuits MC2A and MC2B positioned between the lowest voltage stage and a maximum voltage stage and two parallel-connected conversion circuits MC3A and MC3B providing the maximum voltage stage are, respectively, two circuit serial connection configurations. Three-phase terminals of conversion circuits MC2A and MC3A are serially connected to the previous stage of the three phase terminals at an opposite side to the power supply side of preceding stage of MC1B and MC2B, and the three-phase terminals at the opposite power supply side of the conversion circuits MC2B are connected to a load.

The following merits and advantages are obtained according to the main circuit configuration in the preferred embodiment.

(1) A general-purpose three-phase/three-phase matrix connected semiconductor device module can be utilized.

(2) The number of switching devices can be achieved by the same number of Fig. 4.

(3) Since the LC filters are commonly used for the two parallel-connected conversion circuits, the number of input LC filters can be reduced as compared with Fig. 4.

(4) In addition to the common use of the LC filters, carrier phases of the two parallel-connected conversion circuits are shifted to mutually offset current ripples to enable a reduction in capacity and magnitude of the LC filters.

(5) As compared with Fig. 4, the number of secondary windings of the multiple winding transformer TF can be reduced.

(6) As is different from Fig. 4, the three-phase connection is carried out at the opposite side to the power supply side of the conversion circuit. Hence, since the degree of freedom of the phase is brought out in the output current which is a source of a slicing when an input current PWM control is carried out, an input sinusoidal waveform can be achieved by the conversion circuits soley.

(Embodiment 2)

In embodiment 1, the phase difference is given to the secondary side of the multiple winding transformer to suppress the input higher harmonics. However, if the feature and advantage of item (6) were used, the input sinusoidal wave can be achieved for each of three-phase-to-three-phase alternating current direct conversion circuits without providing the phase difference for the secondary side of the transformer.

Therefore, in this embodiment, the suppression of the input higher harmonics can be achieved without giving the same phase difference at the secondary windings of the multiple winding transformer.

According to this embodiment, the design of the secondary winding side multiple winding transformer becomes complicated and further merits are provided in terms of the construction, the cost, and magnitude.

(Embodiment 3)

Although, in each of preferred embodiments 1 and 2, since three-phase-to-three-phase alternating current direct power conversion circuits MC1A, MC1B, MC2A, MC2B, MC3A, MC3B are singly in their basic units (cell structure), in this embodiment, the common use and common structure can be achieved by the control CPU with two parallel-connected conversion circuits MC1A and MC1B, MC2A and MC2B, and MC3A and MC3B as a basic unit configuration (a configuration enclosed with a dot line in Fig. 1).

According to this embodiment, the wiring between the conversion circuit unit and the control unit can be commonly used and the reduction in the wiring inductance and the common use of the control unit can be achieved.

### BRIEF DESCRIPTION OF THE DRAWINGS

[Fig. 1] is a main circuit configuration view of the high-voltage alternating current direct power converter showing embodiment 1 according to the present invention.

[Fig. 2] is a main circuit configuration view of the high-voltage alternating current direct power converter showing embodiment 2 according to the present invention.

[Fig. 3] is an example of a configuration of a main circuit of a conventional high-voltage inverter.

[Fig. 4] is an example of a configuration of a main circuit of a conventional high-voltage matrix converter.

## Claims

1. A high-voltage AC direct power converter for converting directly a high-voltage alternating current power wherein a plurality of alternating current direct conversion circuits, each of the alternating current direct conversion circuits directly converting voltage and frequency inputted from a multiple winding transformer on which a plurality of secondary windings are installed into arbitrary voltage and frequency and outputting them, and a plurality of LC filers, each of the LC filters being interposed between one of the secondary windings and the alternating current direct conversion circuits, are disposed, the alternating current direct conversion circuits are connected in a multi-stage connection configuration, and a load is directly driven with a high voltage through a control over bi-directional switches in each of the alternating current direct conversion circuits and wherein the multi-stage connection configuration of the respective alternating current direct conversion circuits is made in a way that two parallel connections are made at power supply sides of the two parallel-connected alternating current direct conversion circuits for each stage of the alternating current direct conversion circuits, each phase terminal of an opposite side to the power supply side of one of the two parallel connected alternating current direct conversion circuits of a lowest voltage stage is interconnected, the opposite side to the power supply side of one of the two parallel connected alternating current direct conversion circuits of a maximum voltage stage is connected to the load, the opposite side to the power supply side of one of the two parallel connected alternating current direct conversion circuits of each stage positioned between the lowest voltage stage and the maximum voltage stage is interconnected to the opposite side to the power supply side of one of the two parallel connected alternating current direct conversion circuits of a preceding stage, and the opposite side to the power supply side of the other of the two parallel-connected alternating current direct conversion circuits is interconnected to the opposite side to the power supply side of one of the two parallel connected alternating current direct conversion circuits of the subsequent stage.

2. The high-voltage AC direct power converter as claimed in claim 1, wherein each of the alternating current direct conversion circuits is a multi-phase input and multi-phase output alternating current direct conversion circuit.

3. The high-voltage AC direct power converter as claimed in either claim 1 or 2, wherein each of the secondary windings of the multiple winding transformer has mutually a phase difference to suppress input higher harmonics.

4. The high-voltage AC direct power converter as claimed in either claim 1 or 2, wherein each of the alternating current direct conversion circuits provides singly an input sinusoidal wave and each of the secondary windings of the multiple winding transformer has mutually the same phase to suppress the input higher harmonics.

5. The high-voltage AC direct power converter as claimed in either claim 1 or 2, wherein the two parallel-connected alternating current direct conversion circuits are a basic unit configuration and its controller for the basic unit configuration is commonly used within the basic unit configuration.

## Amended claims

### Amended claims under Art. 19.1 PCT

**1.** (Amended) A high-voltage AC direct power converter for converting directly a high-voltage alternating current power wherein a plurality of alternating current direct conversion circuits, each of the alternating current direct conversion circuits directly converting voltage and frequency inputted from a multiple winding transformer on which a plurality of secondary windings are installed into arbitrary voltage and frequency and outputting them, and a plurality of LC filers, each of the LC filters being interposed between one of the secondary windings and the alternating current direct conversion circuits, are disposed, the alternating current direct conversion circuits are connected in a multi-stage connection configuration, and a load is directly driven with a high voltage through a control over bi-directional switches in each of the alternating current direct conversion circuits and wherein the multi-stage connection configuration of the respective alternating current direct conversion circuits is made in a way that two parallel connections are made at power supply sides of the two parallel-connected alternating current direct conversion circuits for each stage of the alternating current direct conversion circuits, each phase terminal of an opposite side to the power supply side of one of the two parallel connected alternating current direct conversion circuits of a lowest voltage stage is interconnected, the opposite side to the power supply side of one of the two parallel connected alternating current direct conversion circuits of a maximum voltage stage is connected to the load, the opposite side to the power supply side of one of the two parallel connected alternating current direct conversion circuits of each stage positioned between the lowest voltage stage and the maximum voltage stage is interconnected to the opposite side to the power supply side of the other of the two parallel connected alternating current direct conversion circuits of a preceding stage, and the opposite side to the power supply side of the other of the two parallel-connected alternating current direct conversion circuits is interconnected to the opposite side to the power supply side of the other of the two parallel connected alternating current direct conversion circuits of the subsequent stage.

**2.** The high-voltage AC direct power converter as claimed in claim 1, wherein each of the alternating current direct conversion circuits is a multi-phase input and multi-phase output alternating current direct conversion circuit.

**3.** The high-voltage AC direct power converter as claimed in either claim 1 or 2, wherein each secondary winding of the multiple winding transformer has mutually a phase difference to suppress input higher harmonics.

**4.** The high-voltage AC direct power converter as claimed in either claim 1 or 2, wherein each of the alternating current direct conversion circuits itself provides an input sinusoidal wave and each of the secondary windings of the multiple winding transformer has mutually the same phase to suppress the input higher harmonics.

**5.** The high-voltage AC direct power converter as claimed in either claim 1 or 2, wherein the two parallel connected alternating current direct conversion circuits are a basic unit configuration and its controller for the basic unit configuration is commonly used within the basic unit configuration.
